# DEMANDE DE BREVET EUROPEEN

(11) **EP 0 863 325 A1**
(43) Date de publication de la demande: **09.09.1998**
(21) Numéro de dépôt: 98400472.1
(22) Date de dépôt: 27.02.1998
(51) Int. Cl.: F16D 25/12, F16D 13/75

(54) **Procédé et dispositif de réglage d'un vérin de commande d'embrayage**

(30) Priorité: 07.03.1997 FR 9702727
(71) Demandeur: RENAULT, 92109 Boulogne-Billancourt (FR)
(72) Inventeur: Pouyau, Laurent, 92290 Chatenay Malabry (FR); Rivoiron, Sylvain, 95320 Saint Leu La Foret (FR)

(57) **Abrégé**

Procédé de réglage d'un vérin de commande d'embrayage pour transmission de véhicule (1) du type comportant une tige (3) qui assure le débrayage de la transmission en tirant sur une fourchette de débrayage (4) par l'intermédiaire d'un élément d'entraînement (6), caractérisé en ce qu'on retient provisoirement l'élément (6) à l'écart de la fourchette (4) au moyen d'une cale (13) avant de retirer la cale (13) pour laisser ledit élément (6) trouver automatiquement sur la tige (3) l'emplacement dans lequel il ne présente aucun jeu vis-à-vis de la fourchette (4) en situation embrayée.

## Description

La présente invention se rapporte à la commande des embrayages.

Elle concerne le réglage d'un vérin de commande d'embrayage pour transmission de véhicule du type comportant une tige qui assure le débrayage de la transmission en tirant sur une fourchette de débrayage par l'intermédiaire d'un élément d'entraînement.

Cette invention trouve une application privilégiée, mais non limitative, dans le réglage des embrayages à commande hydraulique pilotés électroniquement.

Les vérins utilisés pour commander les embrayages de véhicules routiers sont le plus souvent du type «à simple effet». Selon les dispositions courantes dans le domaine de la technique, le vérin est normalement au repos en situation embrayée, et soumis pour débrayer à une pression de commande, qui lui permet de tirer sur la fourchette de débrayage au moyen de sa tige de commande.

De façon classique, la tige du vérin traverse l'extrémité de la fourchette, et présente à proximité de son extrémité une rotule prenant appui sur la fourchette, pour entraîner celle-ci à l'écart de sa position embrayée.

Le bon fonctionnement d'un tel système suppose que l'élément d'entraînement soit appliqué sans jeu contre la fourchette lorsque le vérin est au repos, sans toutefois tirer sur celle-ci tant que l'ordre de débrayage n'a pas été donné.

En raison des dispersions de position de la fourchette de débrayage à l'état neuf, il est nécessaire d'ajuster l'emplacement de l'élément de retenue sur la tige du vérin, avant la mise en service du véhicule.

Pour effectuer ce réglage, il est connu de positionner la rotule sur une barrette fixée à l'extrémité de la tige du vérin. Ce positionnement mérite une attention particulière. En effet, s'il est approximatif, la fourchette et la rotule présentent un jeu de fonctionnement en situation embrayée. L'imprécision qui en résulte dans la commande de l'embrayage est fortement pénalisante, et conduit à réajuster la position de la rotule. Il en est de même lorsque l'usure des garnitures d'embrayage a déplacé la position de repos de la fourchette par rapport à sa position initiale.

La présente invention vise à régler avec précision et fiabilité la course d'un vérin de commande d'embrayage.

Elle propose de retenir provisoirement l'élément d'entraînement de la fourchette à l'écart de celle-ci au moyen d'une cale, puis de retirer cette dernière, de manière à laisser l'élément d'entraînement trouver automatiquement sur la tige l'emplacement dans lequel il ne présente aucun jeu vis-à-vis de la fourchette en situation embrayée.

De préférence, la cale est retirée après le montage du vérin sur la transmission.

Conformément à l'invention, l'élément conserve la même position de fonctionnement jusqu'à l'opération de réglage suivante.

L'invention concerne également un dispositif de réglage d'un vérin de commande d'embrayage pour transmission de véhicule. Ce dispositif comporte un élément de calage provisoire de l'élément sur une partie de la tige.

D'autres caractéristiques et avantages de la présente invention apparaîtront clairement à la lecture de la description suivante d'un mode de réalisation particulier de celle-ci, en liaison avec les dessins annexés, sur lesquels :
- la figure 1 illustre l'état de la technique,
- la figure 2 représente un vérin de commande d'embrayage muni du dispositif de réglage proposé par l'invention,
- la figure 3A est une vue de détail de la figure 2, sur laquelle la rotule d'entraînement de la fourchette est représentée partiellement en coupe, et
- la figure 3B correspond à la figure 3A après le retrait de l'élément de calage provisoire.

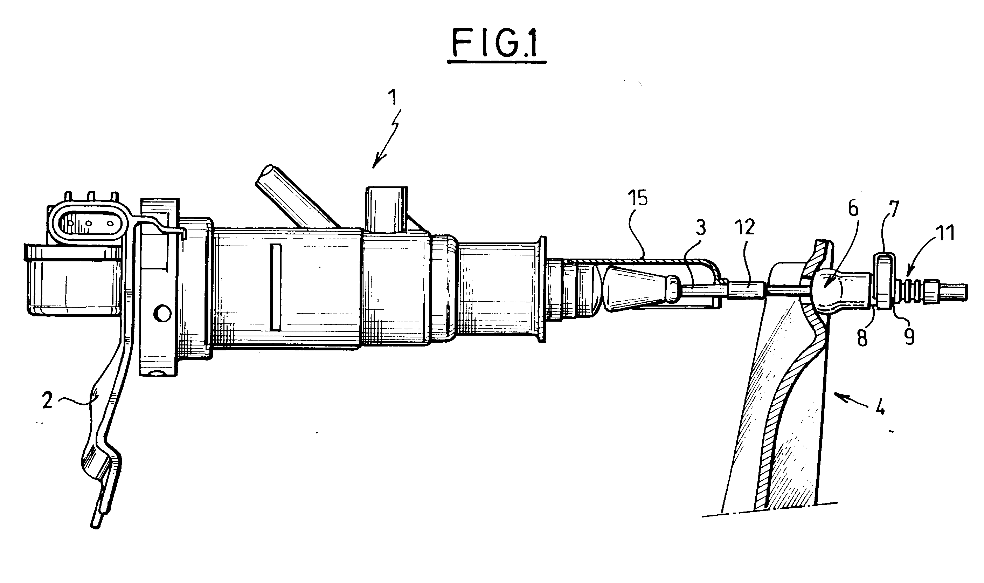

Sur la figure 1, on a reproduit de façon schématique un vérin de commande d'embrayage 1 de type connu, pouvant être fixé au moyen d'une patte de fixation 2 sur une transmission de véhicule (non représentée).

Le vérin 1 est du type «simple effet». Sa tige d'actionnement 3, solidaire d'un piston interne non représenté, coopère avec une fourchette de débrayage 4, dont seule la partie supérieure apparaît sur le schéma. De façon classique, le vérin 1 est au repos en situation embrayée, et reçoit une pression d'huile pour débrayer la transmission en tirant la fourchette 4 vers la gauche de la figure. La tige 3 traverse la fourchette 4, et tire sur celle-ci au moyen d'une rotule 6 prenant appui sur cette dernière. La rotule 6 est immobilisée sur la tige 3 au moyen d'un clip de réglage 7, engagé simultanément dans une rainure 8 de la rotule 6, et dans l'une des gorges 9 ménagées sur une barrette 11 fixée à l'extrémité de la tige 3.

La figure 1 indique également la présence d'une bague 12 sertie sur la tige du vérin 1, et d'une cale d'indexage 15 disposée provisoirement entre le corps du vérin la et la bague 12, de façon à positionner correctement la tige 3 avant le réglage de la rotule. Cet indexage vise à garantir à la tige 3 du vérin une course de fonctionnement suffisante vers la gauche et vers la droite du schéma, pour débrayer, et pour rattraper à l'extrémité de la fourchette le décalage imposé à celle-ci par l'usure progressive des garnitures d'embrayage.

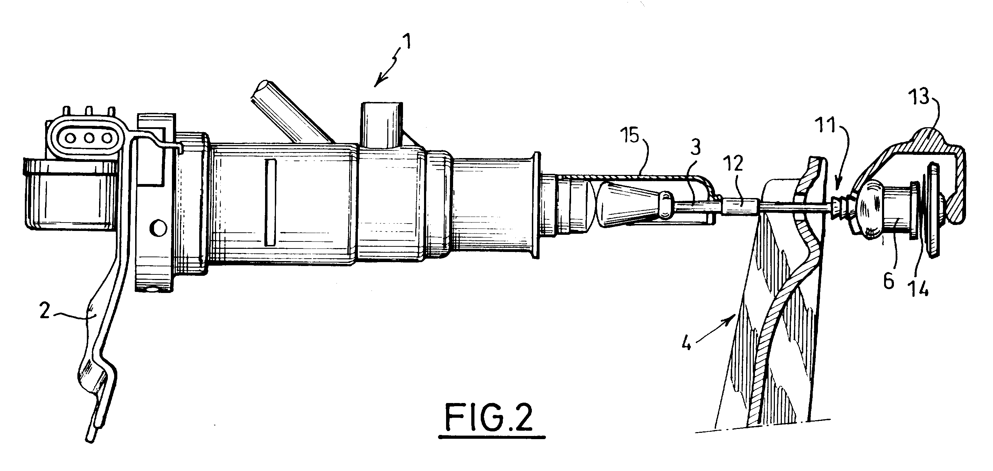

Le vérin illustré par la figure 1 et par la figure 2 peut notamment être utilisé dans un système d'embrayage automatique piloté électroniquement, mais peut également être commandé mécaniquement.

Comme indiqué précédemment, selon l'état de la technique connue, l'ajustement en position de la rotule 6 sur la tige 3 est laissé au soin de l'opérateur, qui choisit à cet effet la gorge 9 appropriée.

Sur la figure 2, on retrouve les mêmes éléments que sur la figure 1 à gauche de la fourchette 4, mais la partie droite du schéma fait apparaître un nouvel élément, constitué par un élément provisoire de calage 13 de l'élément d'entraînement ou rotule d'entraînement 6, de la fourchette 4.

Conformément à l'invention, le dispositif de réglage illustré par la figure 2 comporte en effet une cale 13 maintenant provisoirement l'élément d'entraînement 6 de la fourchette 4 dans une position d'attente sur une partie 11 de la tige 3, telle qu'une barrette 11 fixée à l'extrémité de celle-ci.

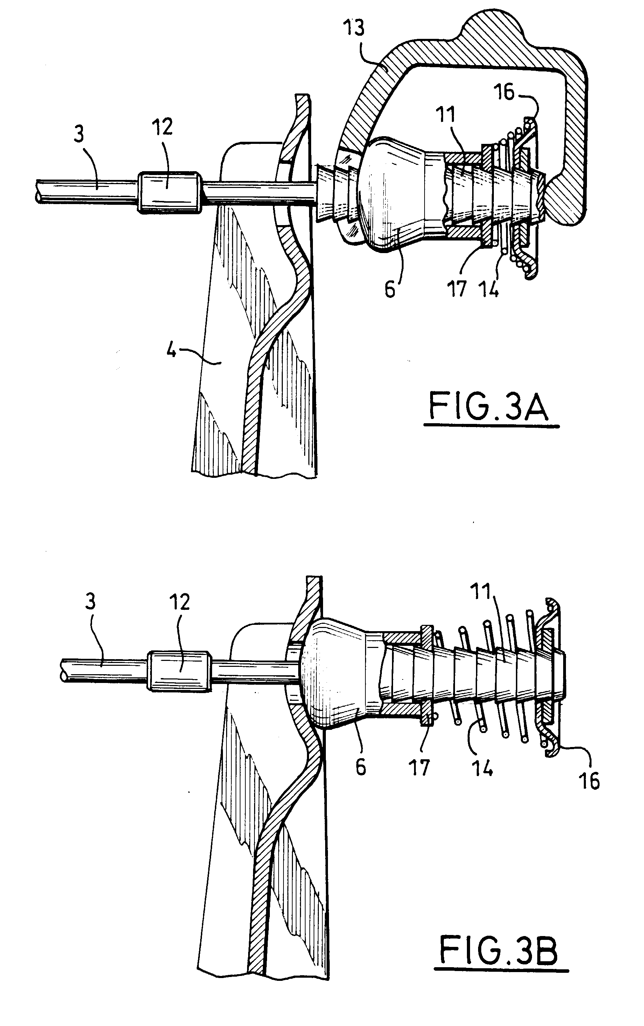

L'élément d'entraînement 6, se présente par exemple, mais sans aucune obligation sous la forme d'une rotule, qui peut se déplacer sur la barrette 11 jusqu'à la fourchette 4 sous l'action d'un ressort 14 apparaissant plus clairement sur les figures 3A et 3B. Le ressort 14 prend appui sur une coupelle 16 fixée à l'extrémité de la barrette. Ce déplacement n'est toutefois possible qu'après le retrait de l'élément de calage provisoire 13.

Comme indiqué sur les figures 3A et 3B, la barrette 11 peut avantageusement être «en pied de sapin», de sorte que l'élément 6 peut être repoussé élastiquement par le ressort 14 contre la fourchette 4, sans possibilité de retour dans la direction opposée.

Plus précisément, le ressort 14 prend appui sur la coupelle d'arrêt 16 et sur un élément d'arrêt 17 solidaire de la rotule 6.

L'élément de calage maintient donc provisoirement le ressort 14, et la rotule d'entraînement 6 contre la coupelle d'arrêt 16, avant que le ressort ne repousse automatiquement la rotule contre la fourchette, en faisant glisser celle-ci sur la barrette en pied de sapin 11.

Sur la figure 2, on retrouve la cale d'indexage 15 de la figure 1, destinée à être retirée après le réglage faisant l'objet de l'invention, et avant la mise en service de l'embrayage. En effet, l'indexage de la tige du vérin (qui vise non pas à tenir compte des dispersions de position de la fourchette à l'état neuf, mais à permettre le rattrapage d'usure de l'embrayage en cours de fonctionnement) n'est pas directement concerné par les mesures proposées, et reste dans tous les cas un préalable nécessaire au réglage proprement dit concerné par l'invention.

Les mesures proposées par l'invention pour effectuer ce réglage consistent principalement à retenir dans un premier temps la rotule d'entraînement 6 à l'écart de la fourchette 4 au moyen de la cale 13, avant de retirer cette cale pour laisser la rotule 6 trouver automatiquement sur la tige 3 l'emplacement dans lequel elle ne présente aucun jeu vis-à-vis de la fourchette 4 en situation embrayée. Conformément à l'invention, cet emplacement est conservé jusqu'à l'opération de réglage suivante, étant donné que la structure de la barrette interdit à la rotule de s'écarter de la fourchette.

L'invention permet donc de simplifier le montage d'un vérin de commande d'embrayage, en remplaçant une opération d'ajustement manuel qui nécessite l'attention particulière d'un opérateur, par un réglage automatique particulièrement fiable, qui autorise un gain de temps non négligeable sur la chaîne de montage.

## Revendications

1. Procédé de réglage d'un vérin de commande d'embrayage pour transmission de véhicule (1) du type comportant une tige (3) qui assure le débrayage de la transmission en tirant sur une fourchette de débrayage (4) par l'intermédiaire d'un élément d'entraînement (6), caractérisé en ce qu'on retient provisoirement l'élément (6) à l'écart de la fourchette (4) au moyen d'une cale (13) avant de retirer la cale (13) pour laisser ledit élément (6) trouver automatiquement sur la tige (3) l'emplacement dans lequel il ne présente aucun jeu vis-à-vis de la fourchette (4) en situation embrayée et en ce que l'élément (6) conserve la même position de fonctionnement jusqu'à l'opération de réglage suivante.

2. Procédé de réglage selon la revendication 1, caractérisé en ce que la cale (13) est retirée après le montage du vérin (1) sur la transmission.

3. Procédé de réglage selon la revendication 1, ou 2, caractérisé en ce que l'élément (6) est repoussé élastiquement contre la fourchette (4).

4. Procédé de réglage selon la revendication 1, 2 ou 3 précédentes, caractérisé en ce que l'élément (6) ne peut se déplacer qu'en direction de la fourchette (4).

5. Dispositif de réglage d'un vérin de commande d'embrayage (1) pour transmission de véhicule du type comportant une tige (3) qui assure le débrayage de la transmission en tirant sur une fourchette de débrayage (4) par l'intermédiaire d'un élément d'entraînement (6), caractérisé en ce qu'il comporte un élément de calage provisoire (13) de l'élément (6) sur une partie (11) de la tige (3), constituée par une barrette en pied de sapin, sur laquelle l'élément (6) peut se déplacer jusqu'à la fourchette (4) sous l'action d'un ressort (14) en l'absence de l'élément de calage (13).

6. Dispositif de réglage selon la revendication 5, caractérisé en ce que le ressort (14) prend appui sur un élément d'arrêt (16) fixé sur la partie (11), et sur un élément d'arrêt (17) solidaire de l'élément d'entraînement (6).

7. Dispositif de réglage selon la revendication 6, caractérisé en ce que l'élément de calage (13) maintient provisoirement le ressort (14) et l'élément d'entraînement (6) contre l'élément d'arrêt (17).
